# EUROPEAN PATENT APPLICATION

(11) **EP 4 257 333 A1**
(43) Date of publication of application: **11.10.2023**
(21) Application number: 22167091.2
(22) Date of filing: 07.04.2022
(51) Int. Cl.: B29C 51/16, A47K 3/16, A47K 3/40, B29C 51/26, B29L 31/00, E03F 5/04

(54) **A METHOD TO PROVIDE A SHOWER TRAY**

(71) Applicant: EAUZON, 8670 Oostduinkerke (BE)
(72) Inventor: Callens, Lander Windekind, 8670 Oostduinkerke (BE)
(74) Representative: IP HILLS NV

(57) **Abstract**

A method to provide a shower tray (10, 11, 12) is provided. The method comprises the steps of
providing a rigid foam polymer volume (101, 110);
providing a first watertight polymer sheet (102);
converting the rigid foam polymer volume (101, 110) into a rigid foam polymer mould (110, 120) having a top surface (121), said converting comprising at least a first (1) machining step (145);
heating the first watertight polymer sheet (102);
covering and connecting at least the top surface (121) of the rigid foam polymer mould (110, 120) with and to the heated first watertight polymer sheet (102) by vacuum forming, thereby forming a shower tray (10, 11, 12).

## Description

### Field of the Invention

The present invention generally relates to method to provide shower trays, and shower trays obtainable and obtained using such methods.

### Background of the Invention

Nowadays, the importance of shower trays increases. More and more buildings and accommodations opt for the provision of a shower instead of a bathtub. The provided showers preferably are flush with the floor level or show only a little step. As such, these showers are more easily accessible for any person, including physically disabled persons. To provide such showers, shower trays are typically used.

More and more houses and apartments are refurnished instead of newly constructed. The provision of such showers in renovated houses and apartments and alike, is subjected to existing restrictions, like the position of water taps, drain and the dimensions of the available space. Also in new constructions, space may be restricted or subject to specific design.

Therefore, more and more there is a need for showers, and as a consequence shower trays, which fulfil specific criteria linked to the place the shower needs to fit in. On the other hand, sanitary equipment is typically produced in large series, all equipment in the series, like series of shower trays, having uniform dimensions.

Hence there is a need for a method to manufacture sanitary equipment, and more specific shower trays, which can be produced piecewise or in small series, having properties tuned to the specific criteria and dimensions linked to the circumstances where the shower tray needs to be installed.

### Summary of the Invention

It is an object of the present invention to provide a method to provide, i.e. produce, shower trays, which method overcomes some or all the drawbacks of the prior art. in particular, it is an object of the present invention to provide a method to provide, i.e. produce, shower trays, which method facilitates production of shower trays piecewise or in small series in an economical viable way. The methods of the present invention allow the provision of a shower tray, having properties tuned to the specific criteria and dimensions linked to the circumstances where the shower tray needs to be installed piecewise or in small series production.

According to a first aspect of the invention, a method to provide a shower tray is provided, the method comprising the steps of
- providing a rigid foam polymer volume;
- providing a first watertight polymer sheet;
- converting the rigid foam polymer volume into a rigid foam polymer mould having a top surface, said converting comprising at least a first machining step;
- heating the first watertight polymer sheet;
- covering and connecting at least the top surface of the rigid foam polymer mould with and to the heated first watertight polymer sheet by vacuum forming, thereby forming a shower tray.

Machining is the action in which a material is cut to a desired final shape and size by controlled material-removal. Machining may be or may include a milling process, a grinding process, a shaving process, a cutting process, a sawing process, and/or any other alike process. The rigid foam polymer volume is machined and as such provided with said top surface.

The top surface of the rigid foam polymer mould will support, once covered with the polymer sheet, the upper surface of the shower tray. The top surface of the rigid foam polymer mould may support the shower tray floor, adapter to carry users during use of the shower tray. The top surface of the rigid foam polymer mould may provide upstanding rims, typically along the sides or edge of the shower tray, to meet the side walls of the shower cell of which the shower tray may be part of, or to provide the border of the shower tray, preventing water to run from the shower tray in a direction different from the direction to the drain. The top surface of the rigid foam polymer mould may provide recessions, typically along the sides of the shower tray, to receive side walls of the shower cell of which the shower tray may be part of. The top surface of the rigid foam polymer mould may provide other functional surfaces or sections at the top surface of the shower tray.

The first polymer sheet is preferably provided as a substantially flat, hence planar polymer sheet.

Vacuum forming is a process in which a polymer sheet, being heated to provide a weakened hence deformable sheet, is placed on a mould. The mould and the weakened sheet are put in chamber or under an airtight layer (like e.g. rubber sheet), after which vacuum is drawn in this chamber or between the airtight layer, the weakened hence deformable sheet and the mould, while airtight layer presses on the outer side of the sheet. The ambient pressure presses the airtight layer to the weakened sheet and since this is weakened, the weakened sheet bends and takes the form of the outer side of the mould. In the method according to the invention, the mould is a rigid foam polymer mould, and the weakened polymer sheet is connected to the outer surface of the rigid foam polymer mould during vacuum forming. For the connection, a glue can be applied and used to either the polymer sheet and/or the rigid foam polymer mould, or the polymer sheet and the polymer mould may adhere to each other by means of the weakened polymer itself, which is referred to as direct adhesion or thermoplastic welding.

As such, the rigid foam polymer mould becomes part of the product being made, i.e. a shower tray. Because the rigid foam polymer mould is to be shaped for each shower tray individually, piecework or small series can be easily made by varying the form of the rigid foam polymer mould.

The applied range of temperature to heat the polymer sheet may be dependent on the polymer used to provide the first polymer sheet. The temperature is raised to such level that the polymer sheet is weak enough to drape to the outer shape of the rigid foam polymer mould. Possibly the polymer sheet is heated more at specific regions or zoned of the polymer sheet, where a larger curvature of the rigid foam polymer mould surface is to be complied with. Also the vacuum and time for vacuum ramping up and maintaining the vacuum, may be varied as well.

The rigid foam polymer volume may be a block, a 3D shape, polyhedron, hexahedron, cuboid, rectangular cuboid, prism, polygonal prism like a pentagonal or hexagonal prism, four sided prism, square prism, a cuboid, a cube, a prims with a ground surface being a circle segment or a circle sector, or any other suitable volume.

Most preferred, a rigid foam polymer volume cuboid is provided. The dimensions of this cuboid may be in the range of 50 cm to 2 m in width, 50 cm to 4 m in length and 15 mm to 150 mm in height.

According to some embodiments, the rigid foam polymer volume may comprise an open cell polymer foam. An open cell foam is a foam in which more than 40% of the cells are open. With this % is meant the number of cells being open over the total number of calls, expressed as a percentage. According to some embodiments, the rigid foam polymer volume may comprise a closed cell polymer foam. A closed cell foam is a foam in which more than 80% of the cells are closed. With this % is meant the number of cells being closed over the total number of cells, expressed as a percentage.

According to some embodiments, the rigid foam polymer volume may comprise a polymer foam with open and closed cells. A mixed cell foam is a foam in which less than 80% of the cells are closed and less than 40% are open. With this % is meant the number of cells being open, respectively closed, over the total number of calls, expressed as a percentage. The polymer foam is preferably provided from thermoplastic polymer or polymers, such as polyamide (PA), thermoplastic polyesters (PES) like polyethylene terephthalate (PET) or modified polyethylene terephthalate (mPET), polyethylene (PE), polypropylene (PP), polyvinyl chloride (PVC), polystyrene (PS), polycarbonates (PC) and alike, or mixtures thereof. Alternatively the polymer foam may be provided from thermohardening polymer or polymers, like thermoset polyesters, epoxy resins, phenol-formaldehyde resins, and alike. Optionally the polymer foam may comprise both thermoplastic polymer and thermohardening polymer. According to some embodiments, the rigid foam polymer volume may be a polyester foam, provided from polyester polymer. Closed cell foams are preferred, since these may prevent leakage of water during use of the shower tray in case of any damage caused to the shower tray.

The polyester foam may preferably be a polyethylene terephthalate foam. Polyethylene terephthalate is also referred to as PET. According to some preferred embodiments, the polyester foam may comprise recycled polyethylene terephthalate. According to some preferred embodiments, the polyester foam may be provided from recycled polyethylene terephthalate, also referred to as rPET. PET and possibly rPET is preferred, since this polymer is sufficiently waterproof, and is usually tough enough to resist the impact forces which may occur during use of the shower tray. rPET is also preferred due to the readily availability of such recycled polyethylene terephthalate.

The foam of the rigid foam polymer volume may be sufficiently hard, i.e. being rigid, when having a nominal compression modulus (E_{c}) in the range of 0.15MPa to 10 MPa. This nominal compression modulus is measured according to ISO844, procedure A. Nominal compression moduli in this range may ensure optimal resistance against impact loads on the shower tray being used as shower floor. When the compression modulus is too low, the foam will show large elastic deformation, which could lead to delamination between the different layers. When the compression modulus is too high, impact energy may not be dissipated enough, and may cause damage to either the foam core or the first polymer sheet.

The foam of the rigid foam polymer volume may have a density of more than or equal to 50 kg/m³. The foam of the rigid foam polymer volume may have a density in the range of 50 to 400 kg/m³. More preferred, the foam of the rigid foam polymer volume has a density in the range of 70 to 150 kg/m³. Foams having a density of less than the density in these ranges may not be stable and rigid enough to support the forces applied to the shower tray during installation and use, like impact forces which may act during installation or use. Foams having a density above the density in these ranges may become too expensive and/or become too heavy for the intended use. Though foams having a density above the density in these ranges are suitable for the intended use, the excessive weight may hinder during installation, and tend not to bring any further advantage to the use of the foam in the shower tray.

The rigid foam polymer volume may be machined, in a first or second machining step, using any machining tool suitable for machining the foamed polymer. The first or second machining step may include milling, grinding, shaving, cutting and any other suitable process to remove polymeric material from the rigid foam polymer volume. As a mere example, vertical milling machines (e.g. turret milling machines or bed milling machines), horizontal milling machines or universal milling machines may be used. Most preferably a NC milling machine or a CNC milling machine is used.

The rigid foam polymer mould may have a top surface comprising a sloped section, adapted to carry the user of the shower tray once installed, and to guide water to a specific point on the surface of the shower tray, typically the position of the drain, during use of the shower tray. The method according to the invention may comprise the provision of such sloped section by the at least first machining step applied to the rigid polymer foam volume. The provision of such sloped section may be provided by a milling process and/or a grinding process applied to the rigid polymer foam volume.

The rigid foam polymer mould may comprise a sloped section, having a slope in the range of 5 to 50 mm/m. More preferred, the slope may be in the range of 6 to 25 mm/m. The slope is preferably more than or equal to 5mm/m, even more than or equal to 10mm/m. The slope may be uniform at each point of the sloped section or may vary gradually or stepwise.

The top surface or side of the rigid foam polymer volume is at least machined, e.g. milled and/or grinded, to provide a non-planar top surface comprising a sloped section. According to some embodiments, after the at least first machining step, the minimum thickness of the rigid foam polymer mould in the slope section may be in the range of 10 to 40 mm. Preferably the thickness of the rigid foam polymer mould in the slope section is at least 20 mm. According to some embodiments, after the at least first machining step, the maximum thickness of the rigid foam polymer mould in the slope section may be in the range of 20 to 30 mm. Preferably the thickness of the rigid foam polymer mould in the slope section is less than 30 mm. The rigid foam polymer mould has a bottom side opposite to the top side, the maximum and minimum thickness of the rigid foam polymer mould in the slope section is the maximum and minimum distance between the top and bottom side in a direction perpendicular to the bottom side. Preferably the maximum height difference of two point of the slope section on the top side of the rigid foam polymer mould is in the range of 10 to 20 mm. A sloped section which has not enough slope, may result in insufficient drainage of water from the shower tray, while too much slope provides an uncomfortable shower tray for users to stand or walk on and may cause dangerous circumstances for the users during use of the shower tray.

According to some embodiments, rigid foam polymer mould may have a raised side, also referred to as upstanding edge, along its perimeter. This upstanding or raised side or edge may be under an angle with the plane perpendicular to the bottom side of the rigid foamed polymer mould, which angle may preferably be in the range of 0 to 50°, such as in the range of 0 to 45°. The raised side may be rounded, the plane parallel to this raised side in that case being any of the tangent planes along the raised side.

The raised side at the top surface or side of the rigid foam polymer mould along the perimeter of the rigid foam polymer mould may form a corner, which corner is preferably rounded. These corners may stay visible and measurable after the covering step.

According to some embodiments, the rigid foam polymer mould may comprise at least one protrusion along at least a part of the edge of the rigid foam polymer mould at the top surface of the rigid foam polymer mould. According to some embodiments, the rigid foam polymer mould may comprise at least one protrusion along the total length of the edge of the rigid foam polymer mould at the top surface of the rigid foam polymer mould. As such a rim may be provided to the shower tray.

The protrusion may have a substantially rectangular, square, trapezoid, the smaller side being oriented upwards, or a circular segment cross section.

So according to some embodiments, the shower tray may comprise a rim. The rim may be provided by a protrusion along at least a part of the edge of the rigid foam polymer mould.

Optionally the rigid foam polymer mould may comprise two mutually parallel protrusions along at least a part, or the whole of the edge of the rigid foam polymer mould at the top surface of the rigid foam polymer mould. The two protrusions may be spaced one from the other, and thereby providing a groove adapted to receive shower walls of the shower call of which the shower tray is part of. The inner protrusion, most far removed from the side walls of the shower tray, may be less high as compared to the other, outer protrusion. The method may further comprise the step of providing a seal, like a rubber seal, e.g. a neoprene seal on the bottom of the valley between the two protrusions.

The rigid foam polymer mould may comprise at its top surface at least one protrusion along at least part of the edge of the rigid foam polymer mould, the method comprises the provision of this protrusion by the at least first machining step, e.g. by a milling process. The rigid foam polymer mould may comprise at its top surface at least one protrusion along at least part of the edge of the rigid foam polymer mould, the method comprises the provision of this protrusion by connecting a further volume of polymer material to the rigid foam polymer volume.

The volume of polymer material preferably is a strip or cuboid like volume of polymer material. The volume of polymer material preferably is a further, second, volume of foamed polymer material, preferably a rigid foamed polymer material, being different or, even preferred, identical the foam of the rigid foam polymer volume. The connection can be done by sing an adhesive, like a thermal glue, or can be done glueless by direct applying the two volumes to each other with at least one but preferably both connecting sides being heated, also referred to as direct or thermal adhesion.

The connecting of this further volume of polymer material to the rigid foam polymer volume is preferably done after the at least first machining step, and prior to covering the at least the top surface of the rigid foam polymer mould with the heated first watertight polymer sheet by vacuum forming. Possibly a recess is machined, e.g. milled, in the rigid foam polymer volume, in which recess the volume of polymer material is at least partially sunken and connected to the rigid foam polymer volume.

Machining in the protrusion may be done to provide well bonded protrusions to the other parts of the rigid foam polymer volume, like the sloped section or surface of the rigid foam polymer volume. On the other hand, connecting a further volume of polymer material to the rigid foam polymer volume reduces the amount of waste of polymer material being removed by machining.

According to some embodiments, the protrusion typically having a raised side, the angle between a plane parallel to the raised side and the plane perpendicular to the bottom side of the rigid foamed polymer mould, may preferably be in the range of 0 to 80°, such as in the range of 0 to 60°. The raised side may be rounded, the plane parallel to this raised side in that case being any of the tangent planes along the raised side.

The raised side of the protrusion and the surface of the sloped section of the rigid foam polymer volume may form a corner, which corner is preferably rounded. These corners may stay visible and measurable after the covering step, where both surfaces are covered with the heated first watertight polymer sheet by vacuum forming. Typically the corner is rounded, prior and/or after the covering step.

The protrusion may have a raised side and a top side adjacent the raised side, usually between two raised sides. The angle between a plane parallel to this top side and the plane parallel to the bottom side of the rigid foamed polymer mould, may preferably be in the range of 0 to 50°, such as in the range of 0 to 45°. The top side may be rounded, the plane parallel to this top side in that case being any of the tangent planes along the top side. The corners between the raised side and a top side or sides adjacent the raised side may be rounded.

The shower tray may comprise at least one recess along at least a part of the edge of the shower tray at the top side of the shower tray. According to some embodiments, the shower tray may comprise at least one recess along the total length of the edge of the shower tray, at the top side of the shower tray.

The shower tray may comprise at least one recess along at least part of the edge of the shower tray at the top side of the shower tray, the at least one recess being provided by a second machining step performed after covering at least the top surface of the rigid foam polymer mould with the heated first watertight polymer sheet by vacuum forming. When the at least one recess is provided by a second machining step performed after the covering step, the rigid foam polymer is preferably a closed call foam. The second machining step performed after covering at least the top surface of the rigid foam polymer mould with the heated first watertight polymer sheet by vacuum forming preferably includes a milling process

The top surface of the rigid foam polymer mould may comprise at least one recess along at least a part of the edge of the top surface of the rigid foam polymer mould. According to some embodiments, the top surface of the rigid foam polymer mould may comprise at least one recess along the total length of the edge of the top surface of the rigid foam polymer mould. The rigid foam polymer mould may comprise at least one recess along at least part of the edge of the rigid foam polymer mould at the top side of the rigid foam polymer mould, the at least one recess being provided by said first machining step. This provision of a recess by the first machining step may include a milling process to provide the recess.

The recess typically has at least one raised side. The angle between a plane parallel to the raised side and the plane perpendicular to the bottom side of the rigid foamed polymer mould, may preferably be in the range of 0 to 45°, such as in the range of 0 to 30°. The raised side may be rounded, the plane parallel to this raised side in that case being any of the tangent planes along the raised side.

The raised side of the recess and the surface of the sloped section of the rigid foam polymer volume may form a corner, which corner is preferably rounded. These corners may stay visible and measurable after the covering step, where both surfaces are covered with the heated first watertight polymer sheet by vacuum forming. Typically the corner is rounded, prior and/or after the covering step.

The recess may have a raised side and a bottom side adjacent the raised side, usually between two raised sides. The angle between a plane parallel to this bottom side and the plane parallel to the bottom side of the rigid foamed polymer mould, may preferably be in the range of 0 to 50°, such as in the range of 0 to 45°. The bottom side may be rounded, the plane parallel to this bottom side in that case being any of the tangent planes along the bottom side. The corners between the raised side and a bottom side or sides adjacent the raised side may be rounded.

The recess may be adapted to receive the edge of a shower wall of a shower cell of which the shower tray is part of.

Possibly the raised side or sides may be straight or gradually inclined, thereby narrowing down the width of the recess towards the bottom side. Additionally or alternatively the raised side may comprise one or more steps, narrowing down the width of the recess towards the bottom side. The recess usually comprises two raised sides, adjacent a common bottom side.

The method may further comprise the step of providing a seal, like a rubber seal, e.g. a neoprene seal on the bottom of the recess. Preferably the recess comprises two raised sides, the raised side of the recess oriented inwards the shower tray comprises a stepped profile, comprising at least one step. the distance between the two raised sides is smaller at the bottom side of the recess.

As a shower wall may be slid in the recess, this wall may contact the two raised sides of the recess near the bottom wall, where the optional seal may water-tightly close the coupling of the wall and the shower tray. Between the inner side of the shower wall and the top of the inner raised side of the recess, an additional seal may be provided, closing the space between the upper part of the inner raised edge and the wall surface. This second seal may be a rubber seal, e.g. a neoprene seal. As such a double sealed coupling between shower tray and shower wall may be provided.

According to some embodiments, the first polymer sheet may be a thermoplastic polymer sheet, such as a polymer sheet comprising polyamide (PA), polyesters (PES) like polyethylene terephthalate (PET) or modified polyethylene terephthalate (mPET) or recycled polyethylene terephthalate (rPET), polyethylene (PE), polypropylene (PP), or mixtures thereof.

Possibly the first polymer sheet is a polyester polymer sheet. Preferably the first polymer sheet comprises polyethylene terephthalate, most preferred recycled polyethylene terephthalate.

This first polymer sheet may be a thermoplastic polymer sheet and may further comprise reinforcing fibers and/or filaments or one or more textile layers, such as glass fibers, carbon fibers present as individual fibbers of filaments, or as woven, braided, or knitted fabrics comprising or even consisting of such fiber or filaments. Alternatively the first polymer sheet does not comprise reinforcing fibers or textile layers. Hence the first polymer sheet may be fiber-free.

The first polymer sheet may be a composite sheet, comprising at least a first layer providing the outer surface of the sheet, and a second layer contacting the side of the first sheet, opposite to the side providing the outer surface of the sheet.

The first and/or second layer may comprise PET, optionally the first and second layer may comprise PET. Possibly the first and/or second layer may be provided from PET. Optionally the first and second layer may be provided from PET. According to some embodiments, the first and/or second layer may comprise rPET, optionally the first and second layer may comprise rPET. Possibly the first and/or second layer may be provided from rPET. Optionally the first and second layer may be provided from rPET.

The first layer may be less thick than the second layer.

The first layer may have an average thickness in the range of 0,2 to 2 mm. This first layer may provide the decorative side to the top surface of the shower tray.

The second layer may have an average thickness in the range of 1 to 5 mm. This second layer may provide the robustness of the first polymer sheet. Hence The first polymer sheet may have an average thickness in the range of 1,2 to 7 mm.

The first layer and second layer may be laminated to each other. The first layer and second layer may adhere to each other by a thermal glue. Alternatively, the first layer and second layer may adhere directly one to the other, the adhesion being glue free.

The first layer may comprise an uneven surface, thereby providing an uneven outer surface of the shower tray. As such anti slipping or anti sliding properties may be provided to the shower tray is when used.

During the heating of the first watertight polymer sheet, the sheet may be heated to a temperature in the range of 100 to 250 °C, such as in the range of 110 to 160 °C. This in particularly when sheet is a composite sheet, comprising PET in one of its layers. though the sheet may be heated uniformly, optionally, the sheet is not heated uniformly and may have regions where the temperature of the sheet is lower as compared to other regions. The temperature and temperature range to be used in particularly depends on the polymer used to provide the first watertight polymer sheet, as well as the complexity of the shape into which the first watertight polymer sheet is to be formed. The temperature of the first watertight polymer sheet is to be high enough to achieve sufficient moldability of the sheet.

The shower tray may comprise a bottom surface opposite to the top surface of the shower tray. Preferably the bottom surface is substantially flat. This means that, next to normal tolerances, the bottom side or surface is planar, allowing the shower tray to be installed directly to the underlying support, like screed floor. However the method may comprise the provision of adjusting screw, optionally combined with adjusting profiles to the bottom side of the shower tray. This to tune the position of the shower tray to irregularities of the underlying support, like screed floor.

The rigid foam polymer mould may comprise a bottom surface opposite to the top surface of the rigid foam polymer mould. Preferably the bottom surface is substantially flat. This means that, next to normal tolerances, the bottom side or surface is planar. This substantially flat bottom surface may provide a substantially flat bottom surface to the shower tray.

The rigid foam polymer mould may comprise a bottom surface opposite to the top surface, the bottom surface being covered by a second polymer sheet. The method according to the present invention may comprise the step of providing and covering the bottom surface of the rigid foam polymer mould with a second polymer sheet, preferably a planar polymer sheet. Preferably the bottom surface of the rigid foam polymer volume is provided with a second polymer sheet prior to the first machining step.

This second polymer sheet may be similar, even identical in composition as the first polymer sheet. Preferably a rigid second polymer sheet is provided, most preferably from thermoplastic polymer.

The method comprises the step of providing and covering the bottom surface of the rigid foam polymer volume with a second polymer sheet, prior to the first machining step.

Preferably the rigid foam polymer volume is provided with a planar bottom surface to which a planar second polymer sheet is provided.

The provision of such second polymer sheet to the bottom surface of the rigid foam polymer volume prior to the first machining step, has the advantage that the rigid foam polymer volume shows less or even no warping during subsequent machining and the covering step.

The second polymer sheet and the rigid foam polymer volume may adhere to each other by a thermal glue. Alternatively, the second polymer sheet and the rigid foam polymer volume may adhere directly one to the other, the adhesion being glue free.

The rigid foam polymer mould may comprise one or more upstanding edges between its bottom and top surface, e.g. an upstanding edge along the perimeter of the shower tray. The rigid foam polymer mould comprises one or more upstanding edges between its bottom and top surface, during the covering step the one or more upstanding edges being covered with the first polymer sheet. As such, there may be no foam of the rigid foam polymer mould be exposed to the ambient of the shower tray.

The rigid foam polymer mould and the first polymer sheet, a thermal glue may be applied. For this adhesion, as well as any other adhesion of components of the shower tray of the present invention, a thermal glue may be used, such as thermoplastic polyurethane. The amount of glue usually may be in the range of 50 to 500 g/m². Alternatively, the connection between the rigid foam polymer mould and the first polymer sheet is glue-free. This may be done by heating one or both the surfaced which need to adhere and contacting these heated surfaces with each other.

The rigid foam polymer mould may be provided with at least one hole, this hole providing the drain opening of the shower tray. The shower tray may have an uneven top surface. The top side of the rigid foam polymer may have an uneven surface, thereby providing an uneven outer surface of the shower tray. The drain opening of the shower tray may be at the lowest point of the uneven top surface

According to a second aspect of the present invention, a shower tray is provided, which shower tray is obtainable by using a method of the first aspect of the invention. According to a third aspect of the present invention, a shower tray is provided, which shower tray is obtained by using a method of the first aspect of the invention.

A shower tray according to the second or third aspect of the invention may have a rigid foam polymer mould having a density which is substantially uniform throughout the volume of the rigid foam polymer mould. This volume of the rigid foam polymer mould forms the core of the shower tray, and due to the method of manufacturing, the foam is not densified significantly due to the manufacturing steps. Merely the outer section of this volume, i.e. the first 1 or 2 mm of the volume, may be densified to a small extent. In the outer section of this volume, i.e. the first 1 or 2 mm of the volume, the foam may have a density which is at maximum triple of the average density of the foam in centre of the rigid foam polymer mould. Within the other sections of the volume of the rigid foam polymer mould, the deviation of the density may be in the range of - 20 to +20%.

These shower trays may comprise a rigid foam polymer mould and a first watertight polymer sheet adhering to this a rigid foam polymer mould, between these two a glue being present. This glue can be a thermal glue. Alternatively, these shower tray may comprise a rigid foam polymer mould and a first watertight polymer sheet adhering to this a rigid foam polymer mould, the adhesion between these two being glue-free.

The dimensions of these shower trays may be in the range of 50 cm to 2 m in width, 50 cm to 4 m in length and 15 to 150 mm in height.

The shower tray may further comprise adjusting screws, like adjusting screws coupled to the shower tray at its bottom surface, preferably in some or each of the corners of the shower tray, and/or possibly along one, some or all the lower edged of the shower tray. The shower tray may have a polygonal contact surface with the floor (also referred to as footprint), like rectangular, square, pentagonal, hexagonal and alike. The edges between the angles may be straight or curved. The corners itself may be rounded. The edge of the shower tray may also be at least partially curved. Hence the contact surface with the floor may also be curved, e.g. having the form of a circle segment or a circular sector.

The shower tray may further comprise a drain hole, which may be positioned at any location of the shower tray, e.g. in the centre of the shower tray or in one of the corner of the shower tray. The drain hole may have any suitable perimeter, like a circular perimeter. The shower tray may further comprise seals adapted to seal the connection of the shower tray to shower walls.

According to a fourth aspect of the invention a shower tray according the second or third aspect of the invention, or a shower tray obtainable or obtained by a method according to the first aspect of the invention, is used as a part of a shower. Such showers may be installed and used in houses or apartments, residential facilities, hotels, and alike.

### Brief Description of the Drawings

Figures 1 to 7 illustrate schematically the various steps of a method to provide a shower tray according to the invention.
Figure 8 shows schematically an alternative shower tray according to the invention, figures 9 and 10 schematically showing details of this shower tray.
Figure 11 shows schematically the shower tray of figure 8 used as a part of a shower.
Figure 12 shows schematically an alternative shower tray according to the invention.

In the figures, the same reference sighs refer to the same, analogue, or similar feature in the different figures. The figures are schematical representations. The figures are not drawn on scale, except otherwise mentioned.

### Detailed Description of Embodiment(s)

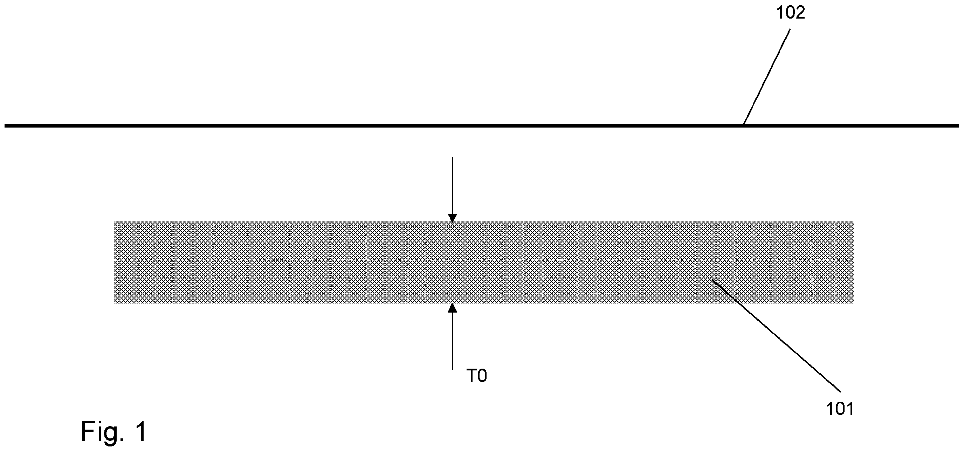

Consecutive steps for providing a shower tray 10 according to a method of the invention, are shown in figures 1 to 7. In a first step in figure 1, a rigid foam polymer volume 101 is provided, as well as a first watertight polymer sheet 102.

The rigid foam polymer volume 101 may be a closed cell foam block in the form of a rectangular cuboid, and made from polyester, more specific rPET. The rigid foam polymer volume 101 may have a density in the range of about 70 to 130 kg/m³ and dimensions of 50 by 100 cm and having a thickness of about 30mm.

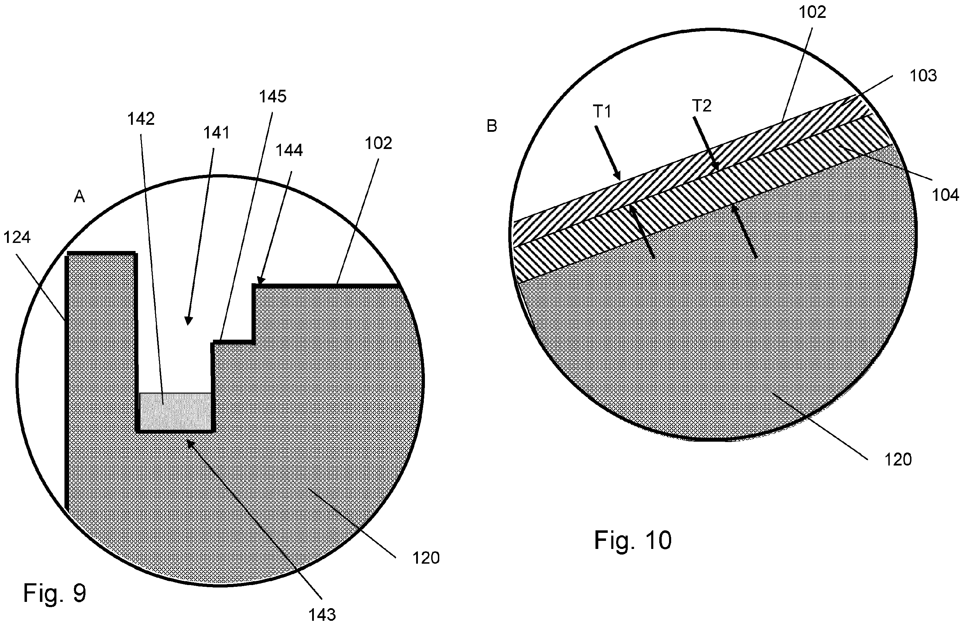

The first watertight polymer sheet 102 is provided as a composite layer or sheet, being composed of a first outer layer 103 and a second layer 104. Details are shown in figure 10. Both layers are provided from a mixture of rPET and PET with a ratio PET:rPET of about 20/80 or 50/50. The layers are adhering one to the other by means of a glue, e.g. thermoplastic polyurethane glue. The first outer layer 103 is at its outer surface not planar, but provided with small unevenness's, providing anti-skid or antislip properties to the top surface of this layer 103. The first outer layer 103 may provide the aesthetic or decorative outlook of the shower tray 10. This first outer layer 103 has a thickness T1 of about 0,3 mm.

The second layer 104 support the lower side of the first layer 103, and has a thickness T2 of about 3 mm. The dimensions of the first watertight polymer sheet 102 are chosen such that, once the shower tray 10 is formed, the first watertight polymer sheet 102 is able to cover the upper or top side and the upstanding edges of the shower tray 10. So the first watertight polymer sheet 102 has a thickness of about 3,3 mm.

The first polymer sheet 102 hence is a composite sheet, comprising at least a first layer 103 providing the outer surface of the sheet, and a second layer 104 contacting the side of the first sheet, opposite to the side providing the outer surface of the sheet.

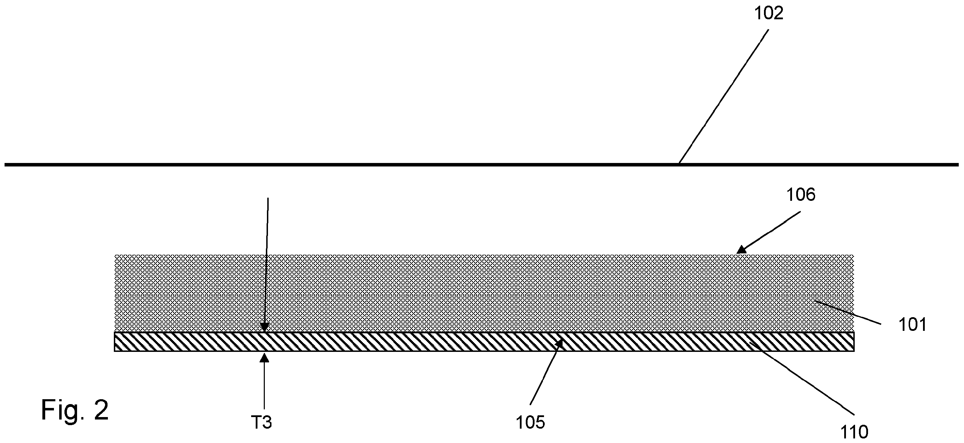

In a further step as shown in figure 2, the bottom surface 105 of the rigid foam polymer volume 101 is provided with a second polymer sheet 110. This second polymer sheet 110is preferably provided to the bottom surface 105 prior to the first machining step. This second polymer sheet 110 may be bounded to the bottom surface 105 by a glue, like a thermal glue, e.g. a thermoplastic polyurethane glue. The second polymer sheet 110 may be provided from a mixture of PET and rPET in a ratio of 80/20 and having a thickness T3 of about 3 mm.

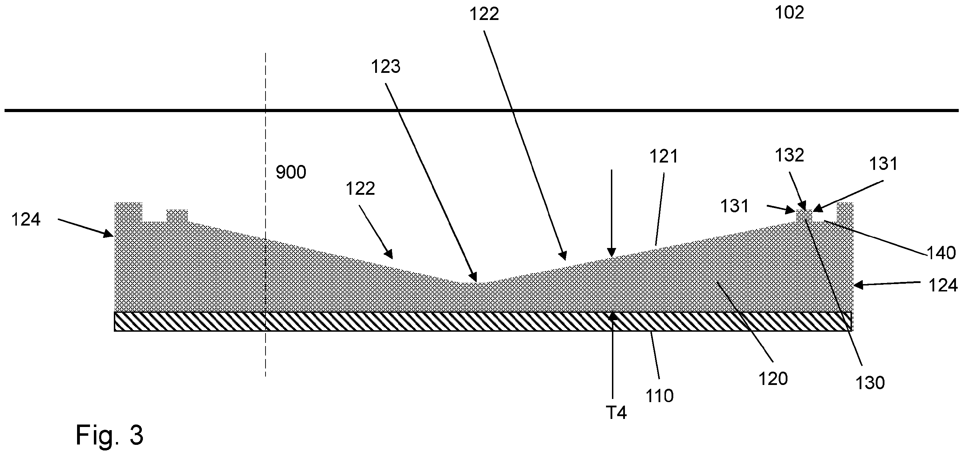

As shown in figure 3, in a next step, the rigid foam polymer volume 101 is converted into a rigid foam polymer mould 120 having a top surface 121, by a first machining step at the top side 106 of the rigid foam polymer volume 101. The bottom side of the rigid foam polymer volume 110 remains as is and provides the bottom side of the rigid foam polymer mould 120. This bottom side 105 is substantially planar. The top surface 121 is provided with a sloped section 122 having a slope of in the range of 5 to 50 mm/m. The thickness T4 of the rigid foam polymer mould 120 in the sloped section 122 may vary, but preferably remains about 8 to 15 mm. On the foot of the sloped section 122, a planar section 123 may be provided, where the drain of the shower tray 10 is to be provided. Along its perimeter, the rigid foam polymer mould 120 may have an upstanding edge 124 which may be under an angle of 0 to 45° with a plane 300 being perpendicular to the bottom side 105 of the rigid foam polymer mould 120.

The rigid foam polymer mould 120 has a protrusion 130 along at least a part of the edge of the rigid foam polymer mould 120. The protrusion has a substantially rectangular cross section. The protrusion 130 is formed at the top surface 121 of the rigid foam polymer mould 120 during the first machining step. The protrusion 130 has two raised sides 131 and a top side 132. The raised sides 131 may be under an angle of 0 to 45° with a plane 300 being perpendicular to the bottom side 105 of the rigid foam polymer mould 120. The top side 132 may be rounded, or as shown in figure 3, be substantially parallel to the bottom side 105 of the rigid foam polymer mould 120. Between the protrusion 130 and the upstanding edge 124, a recess 140 is created.

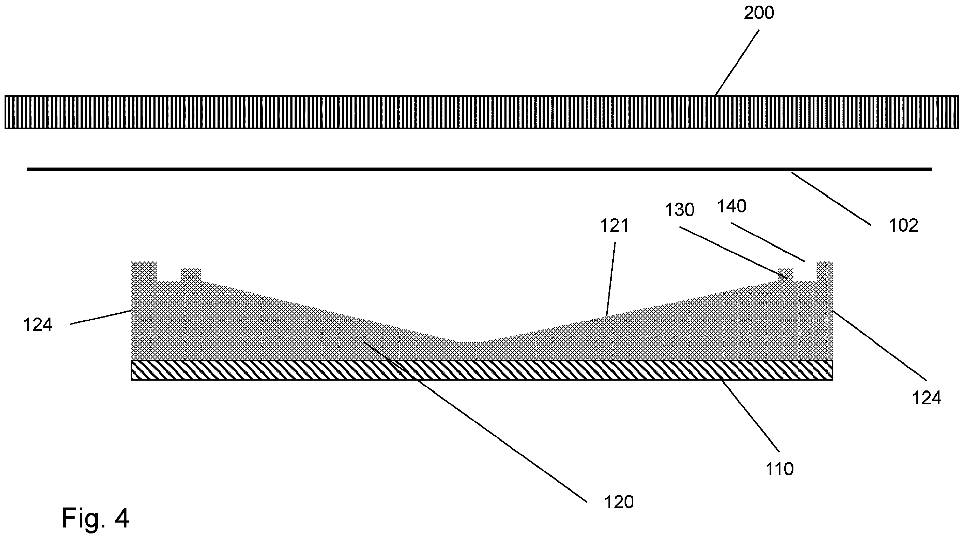

In a next step, as shown in figure 4, the first watertight polymer sheet 102 is heated by a heating device 200, like a radiating device providing heat based upon e.g. electrical power or based on the combustion of combustible matter, like gas. The first watertight polymer sheet 102 is brought to a temperature of about 150 to 160 °C. At zones where a hight deformation is to be provided, e.g. the zones of the first watertight polymer sheet 102 where the sheet needs to cover the protrusion 130, the recess 140 or the raised edges 124 of the rigid foam polymer mould 120, the temperature may locally be higher.

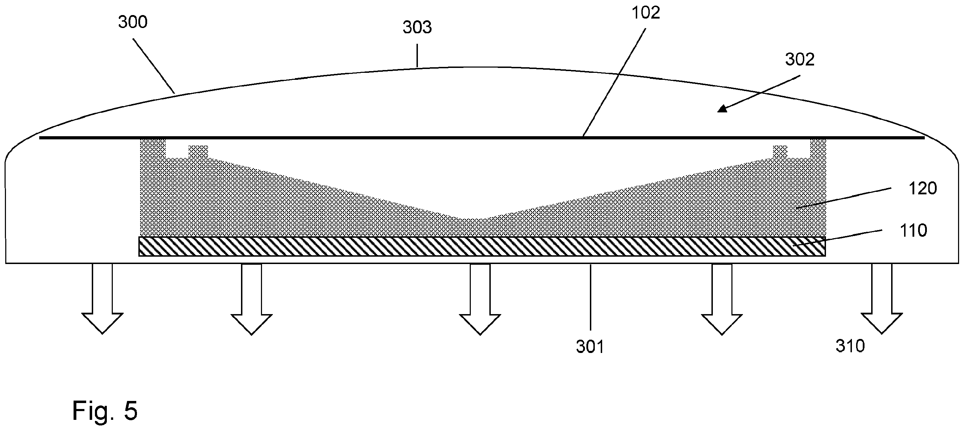

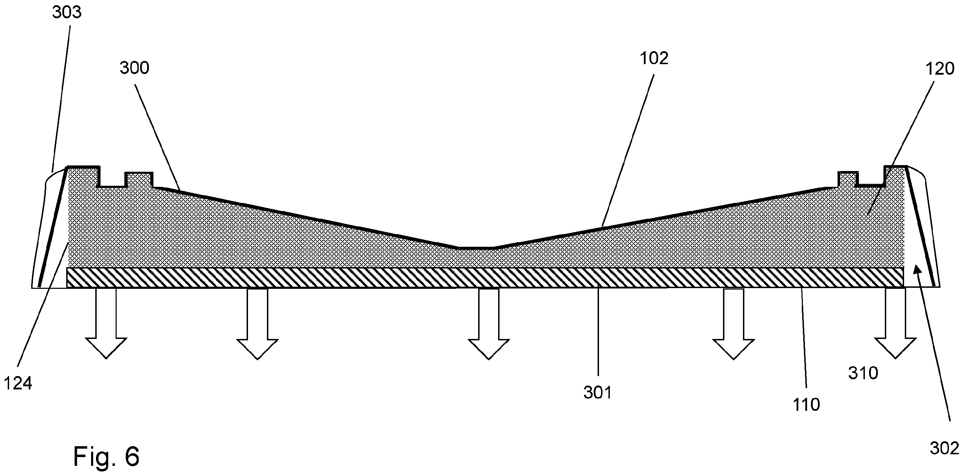

As shown in figures 5 and 6, the heated first watertight polymer sheet 102 is positioned correctly aligned above the rigid foam polymer mould 120 and brought in a vacuum chamber 300. The chamber has a bottom 301 via which the air 310 present in the inner volume 302 of the chamber 300 can be evacuated. At its top side and along its sides, the chamber 300, the chamber 300 is provided with a rubber sheet 303. By evacuating the air from volume 302, the rubber sheet 303 will first contact the heated first watertight polymer sheet 102 and will gradually press the heated first watertight polymer sheet 102 to the top surface 121 of the rigid foam polymer mould 120. The heated first watertight polymer sheet 102 will take gradually the shape of the top surface 121, the more air is evacuated from the volume 302. In fact the relative overpressure of the atmosphere will force the rubber sheet 303 to the heated first watertight polymer sheet 102, and hence the heated first watertight polymer sheet 102 to the top surface 121 of the rigid foam polymer mould 120. The heated first watertight polymer sheet 102, will bend and also contact the upstanding edges 124 of the rigid foam polymer mould 120. When sufficient vacuum is created, the complete top surface 121 and upstanding edges 124 of the rigid foam polymer mould 120 will be covered and contacted by the first watertight polymer sheet 102.

The lower side of the first watertight polymer sheet 102 is provided as such on the top side of the rigid foam polymer mould 120. The vacuum moulding will cause a direct bonding between the first watertight polymer sheet 102 and the rigid foam polymer mould 120. Alternatively the first watertight polymer sheet 102 may be provided with a glue, preferably a thermal glue, and due to the heating, that this will cause the first watertight polymer sheet 102 to stick and adhere to the rigid foam polymer mould 120 by means of this glue.

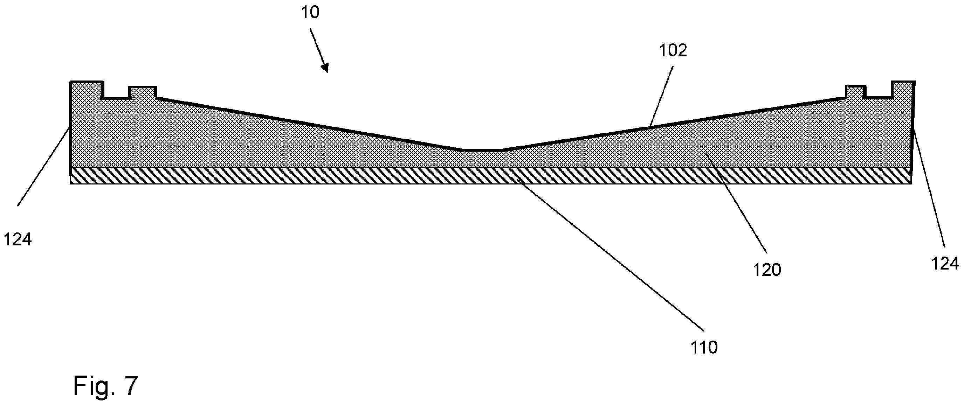

As shown in figure 7, the shower tray 10 is provided and taken out of the chamber 300. The first watertight polymer sheet 102 extends along the edges 124 of the rigid foam polymer mould 120 such it is contacting and adhering to the second polymer sheet 110. As such the shower tray is completely watertight. The rigid foam polymer mould 110 of the shower tray 10 has a density which is substantially uniform throughout the volume of the rigid foam polymer mould. In the outer section of this volume, i.e. the first 1 or 2 mm of the volume 110 along the interference with the first watertight polymer sheet 102, the foam may have a density being twice to three times the average density of the foam in the rigid foam polymer mould. Within the other sections of the volume of the rigid foam polymer mould110, the deviation of the density may be in the range of -20 to +20%.

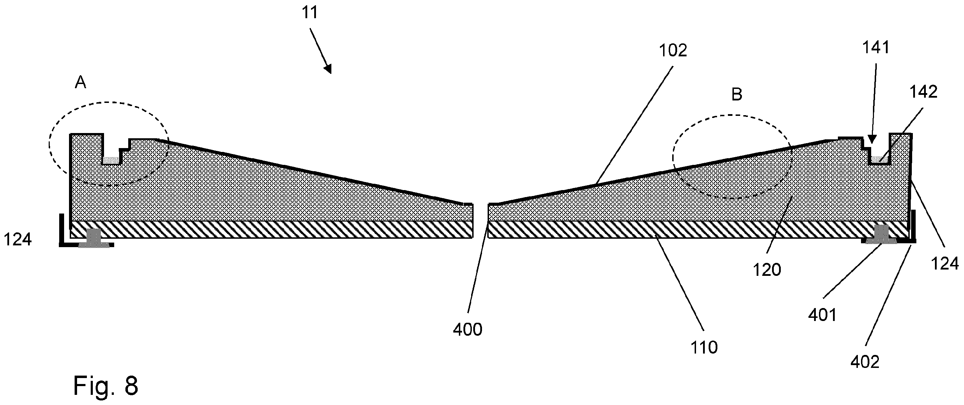

Another shower tray 11 is provided in figure 8, with details shown in figures 9 and 10. The same reference signs refer to the same features provided from the same material and using the same method as explained for the shower tray 10 of figures 1 to 7. In the next step, as shown in figure 8, additional features may be provided to a shower tray 11, like a draining means 400. To provide the draining means, a second machining step may be executed, providing the hole in the shower tray 11 in which the draining means 400 is mounted. Such second machining step may include boring or milling this drain hole. The shower tray 11 may be provided with adjusting screws 401 at the bottom surface of the shower tray 11,. Along the lower edges of the shower tray 11, supporting profiles 402 may be provided, optionally in contact with the adjusting screws 401. In the recess 141, a seal 142, like a rubber seal, e.g. a neoprene seal may be provided on the bottom of recess. Such seals 142 may be provided on the valley between the two protrusions. The recess 141 has a stepped cross sectional profile with one step 145 between the valley 143, or lowest part of the recess and the inner edge 144 of the recess 141.

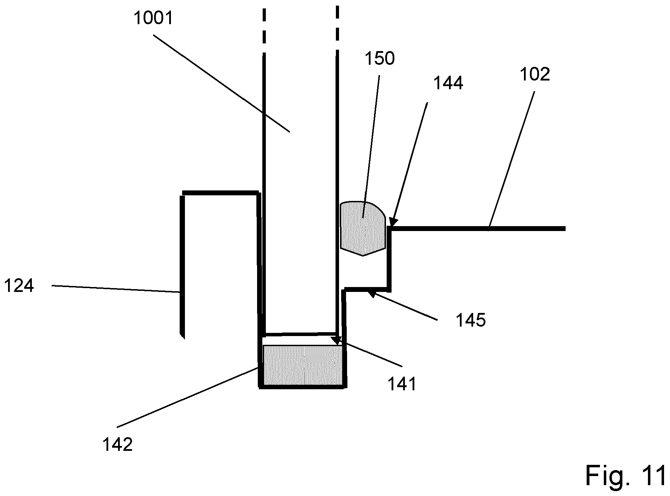

As shown in figure 11, in use, a wall 1001 of the shower may be inserted in the stepped recess 141 of the shower tray 11. The walls thickness is about identical to the width of the recess 141 at the valley 143 of the recess 141. Between the wall 1001 and the inner edge 144 of the recess 141, a second seal 150 may be provided. As such a watertight connection between shower tray 11 and wall 1001 may be provided.

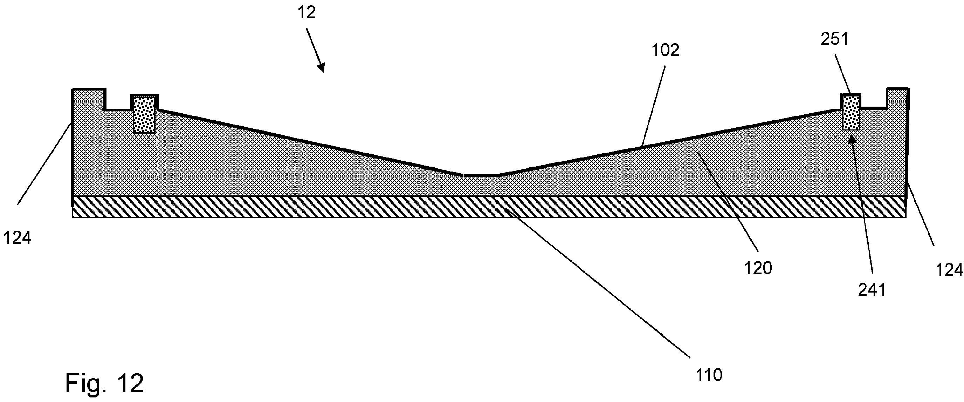

As shown in figure 12, still another alternative shower tray 12 is provided. During the first machining step, a recess 241 is machined, e.g. milled, in the rigid foam polymer volume 101. In this recess 241, and a further volume 251 of polymer material to the rigid foam polymer volume or mould is inserted in the recess 241. The other steps of the method according to the invention are applied hereafter in the same as explained for the shower tray 11.

In the context of this invention, when reference is made to ranges, the ranges are to be understood inclusive, unless explicitly mentioned differently.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to provide a shower tray, the method comprises the steps of
• providing a rigid foam polymer volume;
• providing a first watertight polymer sheet;
• converting the rigid foam polymer volume into a rigid foam polymer mould having a top surface, said converting comprising at least a first machining step;
• heating the first watertight polymer sheet;
• covering and connecting at least the top surface of the rigid foam polymer mould with and to the heated first watertight polymer sheet by vacuum forming, thereby forming a shower tray.

2. - A method according to claim 1, wherein the polyester foam is a polyethylene terephthalate foam.

3. - A method according to any one of the preceding claims, wherein said at least a first machining step includes a milling process.

4. - A method according to any one of the preceding claims, wherein the foam of the rigid foam polymer volume has a density in the range of 50 to 400 kg/m³.

5. - A method according to any one of the preceding claims, wherein the rigid foam polymer volume comprises a sloped section, having a slope in the range of 5 to 50 mm/m.

6. - A method according to any one of the preceding claims, wherein the rigid foam polymer mould comprises at its top surface at least one protrusion along at least part of the edge of the rigid foam polymer mould, the method comprises the provision of this protrusion by the at least first machining step.

7. - A method according to any one of the claims 1 to 5, wherein the rigid foam polymer mould comprises at its top surface at least one protrusion along at least part of the edge of the rigid foam polymer mould, the method comprises the provision of this protrusion by connecting a further volume of polymer material to the rigid foam polymer volume.

8. - A method according to any one of the preceding claims, wherein the shower tray comprises at least one recess along at least part of the edge of the shower tray at the top side of the shower tray, the at least one recess being provided by a second machining step performed after covering at least the top surface of the rigid foam polymer mould with the heated first watertight polymer sheet by vacuum forming.

9. - A method according to any one of the claims 1 to 7, wherein the rigid foam polymer mould comprises at least one recess along at least part of the edge of the rigid foam polymer mould at the top side of the rigid foam polymer mould, the at least one recess being provided by said first machining step.

10. - A method according to any one of the preceding claims, wherein the first polymer sheet is a polyester polymer sheet.

11. - A method according to any one of the preceding claims, wherein the first polymer sheet is fiber-free.

12. - A method according to any one of the preceding claims, wherein the method comprises the step of providing and covering the bottom surface of the rigid foam polymer volume with a second polymer sheet, prior to the first machining step.

13. - A method according to any one of the preceding claims, wherein the rigid foam polymer mould comprises one or more upstanding edges between its bottom and top surface, during the covering step the one or more upstanding edges being covered with said first polymer sheet.

14. A shower tray obtained by using a method according to any one of the claims 1 to 13, wherein the rigid foam polymer mould has a density which is substantially uniform throughout the volume of the rigid foam polymer mould.

15. - The use of a shower tray according to claim 14, or a shower tray obtainable or obtained by a method according to any one of the claims 1 to 13, as a part of a shower.
